# FASCICULE DE BREVET EUROPEEN

(11) **EP 2 558 712 B1**
(45) Date de publication et mention de la délivrance du brevet: **31.05.2017**
(21) Numéro de dépôt: 11717308.8
(22) Date de dépôt: 05.04.2011
(51) Int. Cl.: F16H 61/439, F16H 61/4035, F16H 61/4183, F03C 1/047, F01C 21/00, B60K 17/356, B60K 17/26, B60K 7/00, B60K 23/08

(54) **DISPOSITIF DE TRANSMISSION HYDRAULIQUE PERMETTANT UN CRABOTAGE PEU BRUYANT.**
HYDRAULISCHE GETRIEBEVORRICHTUNG MIT RELATIV LEISER KUPPLUNG
HYDRAULIC TRANSMISSION DEVICE ALLOWING RELATIVELY QUIET COUPLING

(30) Priorité: 16.04.2010 FR 1052932
(43) Date de publication de la demande: 20.02.2013
(73) Titulaire: Poclain Hydraulics Industrie, 60410 Verberie (FR)
(72) Inventeur: PRIGENT, André, F-60410 Saintines (FR); LAMBEY, Julien, F-60200 Compiègne (FR)
(74) Mandataire: Intès, Didier Gérard André
(86) Numéro de dépôt international: PCT/FR2011/050759
(87) Numéro de publication internationale: WO 2011/128556

(56) Documents cités:
- EP-A1- 0 993 982
- FR-A- 1 411 046
- FR-A- 1 425 800
- FR-A1- 2 499 651
- GB-A- 1 314 995

## Description

L'invention concerne un dispositif de transmission hydraulique comprenant au moins un moteur hydraulique à pistons radiaux, ledit moteur comportant
- un carter,
- dans le carter, un bloc-cylindres comprenant une pluralité de cylindres, chaque cylindre contenant un piston coulissant et étant disposé radialement par rapport à un axe de rotation du moteur ; et
- une came ondulée pour les pistons ;
le dispositif comprenant en outre
- deux conduits de moteur respectivement pour l'alimentation en fluide et l'échappement de fluide du moteur, lesdits conduits de moteur étant susceptibles d'être mis en communication avec lesdits cylindres ; et
- un conduit de carter raccordé à un espace interne aménagé à l'intérieur du carter, espace dans lequel règne une pression dite pression de carter ; le moteur étant susceptible d'être craboté, état dans lequel les pistons coulissent dans les cylindres en étant maintenus au contact de la came, et le moteur est apte à générer un couple de sortie sous l'effet d'une différence de pression entre les conduits de moteur, et d'être décraboté, état dans lequel les pistons sont maintenus en position rentrée à l'intérieur des cylindres sous l'effet de la pression de carter.

De tels dispositifs sont notamment utilisés en assistance sur un véhicule, pour permettre en cas de besoin d'actionner le moteur hydraulique comme moteur d'appoint ou d'assistance, dans des conditions de déplacement difficiles du véhicule comme un sol glissant, une forte pente, etc. Le moteur hydraulique est généralement agencé sur un essieu du véhicule dont les roues ne sont pas motrices dans le mode normal d'avance du véhicule ; aussi, lorsque le dispositif de transmission hydraulique est activé, le véhicule dispose de roues motrices supplémentaires.

Une application particulièrement importante de l'invention concerne les dispositifs d'assistance hydraulique montés sur des véhicules routiers, comme des poids lourds, qui peuvent rouler à une vitesse relativement élevée. Sur ces véhicules, il est intéressant que le ou les moteurs d'assistance puissent être activés alors que le véhicule est en marche, par exemple, lorsqu'il roule à plus de 30 km/h.

Malgré ce besoin, de manière générale la plupart des dispositifs de transmission hydraulique du type présenté en introduction sont prévus pour ne permettre le crabotage des moteurs qu'à l'arrêt ou à très faible vitesse.

En effet, la phase de crabotage est particulièrement délicate à réaliser, du fait qu'elle nécessite de mettre en contact les pistons avec la came. Or, si le véhicule est en mouvement, les pistons sont en rotation relative par rapport à la came ; le crabotage entraîne donc une série de chocs brutaux entre les pistons et la came. Le crabotage est bruyant, et éprouvant pour le moteur sur le plan mécanique.

Pour éviter ce problème, on est conduit habituellement à réduire considérablement la vitesse du véhicule au moment du crabotage des moteurs.

Cependant certains dispositifs ont été conçus, notamment par la demanderesse, pour permettre le crabotage en marche.

Ainsi, un premier dispositif connu comporte des moyens de crabotage qui pour réaliser le crabotage relient les conduits de moteur l'un à l'autre tout en les soumettent à la pression de refoulement d'une pompe auxiliaire. Dans le même temps, le carter est porté à la pression atmosphérique. La pression dans les conduits de moteur, qui est supérieure au moment du crabotage à la pression dans le carter, permet la sortie des pistons et donc le crabotage du moteur.

Un tel dispositif est illustré par le brevet EP 0 993 982.

L'inconvénient de ce dispositif est que lors du crabotage du ou des moteurs, les pistons sortent tous ensemble, petit à petit, les chocs entre les pistons et la came sont répétés, et le crabotage est peu satisfaisant comme dit précédemment.

Le brevet EP 0 993 982 présente un deuxième dispositif, voisin du précédent. Dans ce deuxième dispositif, pendant une brève période au début du crabotage, les conduits de moteur sont reliés aux orifices principaux de la pompe principale, alors que le conduit de carter est relié à la pompe auxiliaire. Le carter est donc soumis pendant cette période au moins à la pression de la pompe auxiliaire. Ensuite, au cours de la dernière étape du crabotage, le conduit de carter est mis à la pression atmosphérique, favorisant ainsi l'évacuation du fluide hors du carter.

L'inconvénient de ce dispositif est qu'il requiert une valve de sélection pour relier le conduit de carter soit avec le conduit d'évacuation de fluide (relié au réservoir sans surpression), soit avec la pompe auxiliaire. Il en résulte une certaine complexité.

Un autre inconvénient de ce système est que la pression de la pompe auxiliaire, régnant dans le carter au moment du crabotage est relativement importante. Or, le crabotage entraîne des pics de pression, qui s'ajoutent à cette pression. Par suite, la pression dans le carter pendant ces pics de pression peut endommager les joints du moteur et entraîner la perte d'étanchéité du moteur.

L'objectif de l'invention est de fournir un dispositif de transmission du type présenté en introduction, le dispositif comprenant en outre des moyens de crabotage aptes, pour réaliser le crabotage du moteur, à porter au moins un premier des conduits de moteur à une première pression dite de crabotage supérieure à la pression de carter tout en permettant une évacuation de fluide par le conduit de carter ; dispositif qui soit simple et dans lequel le crabotage du ou des moteurs puisse être réalisé relativement rapidement, sans endommager le ou les moteurs, en minimisant le bruit et pendant que le rotor du ou des moteurs est en rotation.

L'objectif de l'invention est atteint grâce au fait que le dispositif comporte, disposés sur le conduit de carter, des moyens pour limiter la circulation de fluide dans ce conduit, de manière à provoquer une élévation de la pression dans le carter pendant l'opération de crabotage.

La pression dans le carter désigne ici la pression de carter ou pression dans l'espace interne du carter, elle-même étant égale à la pression dans le conduit de carter. Cette pression est appliquée sur les pistons et tend à les faire rentrer à l'intérieur des cylindres du ou des moteurs.

Dans le dispositif selon l'invention, l'opération de crabotage se déroule de la manière suivante. Dès que la pression de crabotage est appliquée au(x) conduit(s) de moteur, du fait de la différence de pression qui s'établit entre les cylindres soumis à la pression de crabotage et le carter, les pistons contenus dans ces cylindres sont incités à sortir.

Dès que ces pistons commencent à sortir des cylindres, comme l'évacuation de fluide hors du carter est limitée par les moyens pour limiter la circulation, la pression dans le carter s'élève. Une contre-pression s'établit donc dans le carter, d'effet antagoniste à celui de la pression dans les cylindres. Cette contre-pression vient limiter la vitesse de sortie de certains pistons hors des cylindres, le fluide présent dans le carter agissant comme une sorte de tampon entre les pistons et la came.

Il s'ensuit que la sortie des pistons en direction de la came se fait à une vitesse et une énergie limitées. Par suite, la violence des chocs entre les pistons et la came est également limitée. Aussi, l'invention permet de réduire la violence des chocs entre les pistons et la came, tout en permettant d'appliquer des pressions élevées dans le ou les conduits de moteur. L'invention permet donc en particulier d'appliquer directement la pression de refoulement de la pompe principale dans le ou les conduits de moteur, sans qu'il soit nécessaire de recourir à un raccordement spécifique à une source de fluide sous pression auxiliaire : De simples moyens pour limiter la circulation de fluide dans le conduit de carter sont employés. Ces moyens sont dimensionnés de manière à réduire la violence des chocs entre les pistons et la came, tout en permettant la sortie des pistons.

Avantageusement, une fois le crabotage réalisé, la contre-pression retombe spontanément, sans nécessiter d'intervention.

Dans le dispositif, le moteur hydraulique ou chacun des moteurs hydrauliques peut comprendre deux conduits de moteur ou davantage. Le nombre de conduits de moteur peut notamment être supérieur à deux, si le moteur est agencé avec des sous-moteurs.

Dans un mode de réalisation, les moyens pour limiter la circulation de fluide comprennent une restriction. La restriction est un moyen particulièrement simple et fiable pour provoquer la hausse de pression souhaitée dans le carter. Naturellement, tout autre moyen (valve progressive commandée, etc.) apte à limiter la circulation de fluide dans le conduit de carter peut être utilisé.

Dans un mode de réalisation, le dispositif comprend un limiteur de pression disposé sur le conduit de carter et apte à limiter l'élévation de pression dans le carter. Par limiteur de pression, on désigne ici un mécanisme comportant une valve qui s'ouvre quand la pression en amont du mécanisme dépasse une valeur prédéterminée, de telle sorte que le mécanisme empêche la pression en amont de dépasser la valeur prédéterminée. La présence du limiteur de pression sur le conduit de carter permet avantageusement de limiter la pression dans le carter et ainsi, d'empêcher que les joints du moteur ne soient soumis à des pics de pression préjudiciables.

Dans un mode de réalisation, le dispositif comprend un clapet anti-retour de limitation de pression, monté en parallèle avec les moyens pour limiter la circulation de fluide, disposé entre le conduit de carter et une source auxiliaire de fluide sous pression, et permettant la circulation de fluide seulement dans le sens allant du carter vers ladite source.

Un tel clapet anti-retour est un moyen simple pour réaliser un limiteur de pression. D'autre part, habituellement les dispositifs de transmission hydraulique comprennent une source auxiliaire de fluide sous pression, pour fournir du fluide à une pression intermédiaire. Cette pression est de l'ordre habituellement de 10 à 30 Bars, ce qui convient bien en tant que contre-pression maximale dans le carter, lors du crabotage.

Dans un mode de réalisation, les moyens de crabotage sont aptes à maintenir le deuxième conduit de moteur à une deuxième pression inférieure à la pression de crabotage pendant l'opération de crabotage, et les moyens pour limiter la circulation de fluide sont dimensionnés de telle sorte que pendant une majeure partie de la phase de crabotage, la pression de carter s'établit entre la première et la deuxième pression.

De préférence, les moyens de crabotage maintiennent la pression de carter entre la première et la deuxième pression pendant la plus grande partie (plus de 75 %) de l'opération de crabotage ; mais des oscillations de pression parasites peuvent se produire et faire passer temporairement cette pression par exemple sous la pression du deuxième conduit de moteur.

Dans les moteurs à pistons radiaux du type visé par l'invention, les cylindres sont mis en communication alternativement avec l'un puis l'autre des conduits de moteur. Habituellement, pour chaque cylindre cela se fait par la mise en communication d'un conduit de cylindre, relié au cylindre, avec différents conduits de distribution, reliés aux conduits de moteur.

Cette mise en communication entre les conduits de moteur et les cylindres se fait de manière progressive. La section de passage entre le conduit de distribution et le conduit de cylindre, nulle à un instant, croît, atteint une valeur maximale, puis revient à zéro.

Aussi, la pression à l'intérieur des cylindres n'a pas simplement deux valeurs, suivant que le cylindre est relié à l'un ou à l'autre des conduits de moteur, mais varie continûment de l'une à l'autre des pressions des deux conduits de moteur, avec des paliers pendant des phases d'isolement des différents cylindres.

En fonction de la pression qui règne à l'intérieur des cylindres, une force de sortie plus ou moins grande s'exerce sur les pistons qu'ils contiennent, pour les pousser vers l'extérieur en direction de la came. A un instant donné, les sections de passage et donc les pressions dans les cylindres étant très variables, il s'ensuit que les forces de sortie s'exerçant sur les pistons sont également très variables.

Par ailleurs, le débit du fluide qui peut être injecté dans les cylindres pour permettre la sortie des pistons est généralement faible, puisqu'il provient habituellement d'une pompe auxiliaire de débit faible. Il n'est donc pas possible qu'à un instant donné, des pistons sortent de leurs cylindres à la fois en grand nombre et à grande vitesse ; le dispositif limite le nombre et/ou la vitesse de sortie des pistons.

Grâce à la contre-pression dans le carter, cette limitation s'opère de la manière suivante, à chaque instant :
- les pistons qui sont le moins incités à sortir de leurs cylindres, c'est-à-dire ceux pour lesquels la pression à l'intérieur de leurs cylindres est la plus faible, ne sortent pas de leurs cylindres, ou encore sont repoussés par le fluide vers l'intérieur de leurs cylindres si la pression dans leurs cylindres est inférieure à la pression de carter ;
- à l'inverse, les pistons soumis à de fortes pressions à l'intérieur de leurs cylindres sont fortement poussés vers la came, et sortent rapidement de leurs cylindres.

Ainsi avantageusement, dans ce mode de réalisation les pistons sortent non pas tous ensemble de leurs cylindres, mais les uns après les autres (éventuellement par petits groupes, en fonction de la configuration du moteur).

A chaque instant, le nombre de pistons qui sont en train de sortir de leurs cylindres est relativement faible. Par conséquent, les pistons qui sortent des cylindres sortent relativement rapidement, car la pression dans le premier conduit de moteur ne chute pas, puisque seul un petit nombre de pistons sortent. Pour la même raison, ces pistons qui sortent parcourent une distance en direction de la came plus importante que si tous les pistons sortaient simultanément.

Par rapport au cas où tous les pistons sortent simultanément, dans ce mode de réalisation la probabilité est donc accrue que les pistons qui sortent des cylindres sortent et atteignent la came sur une rampe montante de celle-ci (partie de la came avec laquelle un piston est en contact pendant un mouvement de sortie hors de son cylindre), et donc sans choc ou du moins avec un choc plus faible que s'ils heurtaient la came sur une rampe descendante de celle-ci.

La sortie successive et non simultanée des pistons, dans ce mode de réalisation, permet que le nombre et la violence des chocs de pistons contre la came soient nettement réduits, et que le bruit causé par l'opération de crabotage soit fortement diminué.

En outre, la contre-pression dans le carter crée une force de rappel qui tend à repousser les pistons à l'intérieur des cylindres, lorsque la pression à l'intérieur de leurs cylindres est plus faible que la contre-pression. Par suite, si un piston n'a pas eu le temps de rejoindre la came au cours d'un mouvement de sortie, alors, une fois que la pression dans son cylindre décroît à nouveau, et devient inférieure à la contre-pression, le piston est repoussé et se replace au moins en partie dans son cylindre. Si malgré ce mouvement, la came vient à heurter le piston, le choc sur celui-ci est réduit.

Enfin, lorsqu'un piston arrive en contact avec la came, il tend à rester en contact avec celle-ci. Aussi, très rapidement l'ensemble des pistons sortent, et sont en contact avec la came.

Dans un mode de réalisation, les moyens de crabotage sont aptes, pendant l'opération de crabotage, en parallèle avec les moyens pour limiter la circulation de fluide, à relier le conduit de carter via un clapet taré au deuxième conduit de moteur, afin de limiter la pression dans le carter.

Ainsi, la pression dans le conduit de carter n'excède pas la pression dans le deuxième conduit de moteur de plus d'une valeur prédéterminée. Avantageusement, une surpression dans le carter est évitée, et les joints du moteur sont protégés. De plus, le différentiel de pression entre le deuxième conduit de moteur et le carter est ainsi contrôlé, ce qui permet par suite de contrôler la force de rappel qui repousse les pistons dans leurs cylindres. Ainsi, on peut s'assurer que les pistons sont repoussés suffisamment doucement et sans dommages à l'intérieur de leurs cylindres.

De plus, l'évacuation du fluide du carter vers le deuxième conduit de carter augmente la quantité de fluide injectée dans les conduits de moteur, ce qui favorise l'élévation de pression dans ceux-ci et ainsi, accélère l'opération de crabotage.

Dans un mode de réalisation, le dispositif comporte une pompe principale ; les moyens de crabotage sont aptes à mettre en relation un orifice principal de refoulement de la pompe principale pendant l'opération de crabotage avec le premier conduit de moteur, pour permettre l'alimentation du moteur ; le moteur est relié à au moins une roue pour l'entraîner ; et les moyens de crabotage sont aptes, avant de réaliser l'opération de crabotage, à synchroniser la pompe principale en faisant varier la cylindrée de celle-ci jusqu'à une valeur permettant d'entraîner le moteur à une vitesse de rotation différant de moins de 25 % de la vitesse de la roue.

La pompe principale peut être une pompe fonctionnant en circuit ouvert. Dans ce cas, de manière connue en soi, il n'y a pas de pompe de gavage ; celui des deux conduits de moteur qui n'est pas relié à l'orifice de refoulement de la pompe est relié à un réservoir sans surpression et permet l'échappement de fluide du moteur.

Avantageusement, la synchronisation de la pompe principale, c'est-à-dire le réglage de la cylindrée de celle-ci à une valeur adaptée, en l'occurrence, pour entraîner le moteur en rotation à une vitesse peu différente de celle de la roue, permet pendant l'opération de crabotage, eu égard au fait qu'une partie des pistons ne sont pas encore complètement sortis, de disposer d'un débit de la pompe suffisant pour maintenir la pression dans le premier conduit de moteur et ainsi, permet une sortie des pistons et un crabotage rapides.

Dans un mode de réalisation, le dispositif comporte une pompe principale et une pompe auxiliaire, et les moyens de crabotage sont aptes à relier un orifice de refoulement de la pompe auxiliaire avec le premier conduit de moteur pendant l'opération de crabotage. Ce mode de réalisation vise le cas d'un dispositif dans lequel le crabotage est réalisé à l'aide de la pompe auxiliaire. Celle-ci met alors sous pression le premier conduit de moteur, le second conduit de moteur demeurant de préférence à la pression atmosphérique pendant cette opération.

Dans un mode de réalisation, les moyens de crabotage sont aptes, pendant l'opération de crabotage, à relier le conduit de carter au deuxième conduit de moteur.

Grâce à cet agencement, le fluide évacué du carter par le conduit de carter rejoint le deuxième conduit de moteur, ce qui favorise le maintien d'une certaine surpression dans ce conduit et permet d'assurer que les pistons entrés en contact avec la came restent en permanence en contact avec celle-ci.

Dans un mode de réalisation, les moyens de crabotage sont aptes à relier le conduit de carter, en parallèle avec les moyens pour limiter la circulation de fluide, à un conduit d'apport de fluide via un clapet anti-retour de remplissage du carter, permettant l'apport de fluide dans le carter, notamment pendant l'opération de décrabotage du moteur.

Cet agencement permet pendant l'opération de décrabotage d'injecter du fluide dans le carter, avec un débit qui n'est pas limité par les moyens pour limiter la circulation de fluide, ce qui facilite l'obtention d'un débit relativement important et permet ainsi de réaliser l'opération de décrabotage dans un délai très court.

Dans un mode de réalisation, le dispositif comporte en outre un accumulateur apte à alimenter le conduit de carter pour la mise sous pression de ce conduit pendant une opération de décrabotage du moteur, favorisant ainsi la rentrée des pistons dans les cylindres.

L'accumulateur peut être un accumulateur hydraulique du type à gaz ou à ressort rechargeable, qui contient du fluide sous pression et est capable d'emmagasiner de l'énergie hydraulique sous forme d'énergie hydrostatique et de restituer de l'énergie hydraulique à partir de l'énergie hydrostatique emmagasinée.

Un tel accumulateur est à même de fournir très rapidement une certaine quantité de fluide, ce qui permet de réduire la durée de l'opération de décrabotage. De plus, cet accumulateur permet un remplissage de la boucle fermée par un moyen qui n'est pas limité en débit comme l'est une pompe auxiliaire ou pompe de gavage, et permet donc l'utilisation d'une pompe de gavage peu volumineuse.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1A est une vue schématique d'un dispositif selon l'invention, dans un premier mode de réalisation ;
- les figures 1B et 1C présentent deux dispositifs voisins du dispositif de la figure 1A, et proposent des alternatives pour remplacer un clapet anti-retour du dispositif de la figure 1A ;
- la figure 2 représente une coupe perpendiculaire à son axe de rotation, d'un moteur pouvant être utilisé dans un dispositif selon l'invention ;
- les figures 3 à 6 sont des vues schématiques de dispositifs selon l'invention, dans trois modes de réalisation présentant différentes possibilités de réalisation de l'invention.

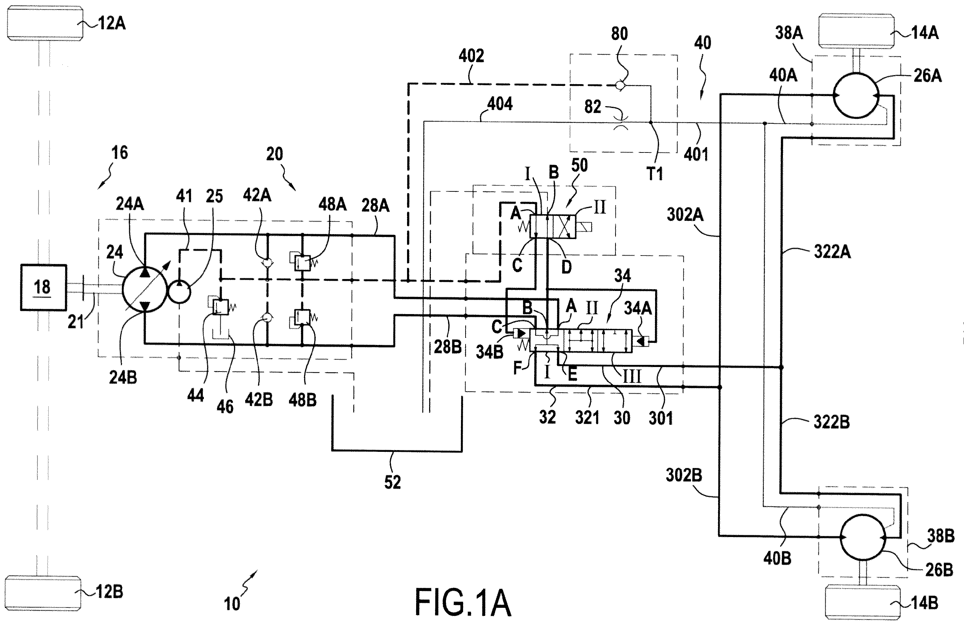

La figure 1A représente un véhicule 10 sur lequel est monté un dispositif 20 selon l'invention.

Le véhicule 10 est un véhicule à quatre roues, à savoir deux roues arrière 12A, 12B, et deux roues avant 14A, 14B. L'entraînement du véhicule est assuré en régime normal par une transmission principale 16. Celle-ci comporte un moteur diesel 18, lié aux roues arrière 12A et 12B, qui assure l'entraînement du véhicule en temps normal.

De plus, pour assurer la propulsion du véhicule dans des conditions de route difficiles (route en pente ou déclive, route glissante, etc.), le véhicule comporte également une transmission auxiliaire 20. Celle-ci permet de rendre motrices en plus les deux roues 14A et 14B, qui ne sont pas motrices en temps normal. Ainsi grâce à la transmission auxiliaire 20, le véhicule dispose d'un mode assisté, dans lequel les quatre roues 12A, 12B, 14A et 14B sont motrices.

La transmission auxiliaire 20 est couplée à un arbre 21 qui est lié à la sortie de puissance venant du moteur 18, duquel elle tire l'énergie qu'elle transmet aux roues 14A, 14B lorsqu'elle est activée.

La transmission auxiliaire 20 constitue un dispositif de transmission hydraulique, qui transmet une partie de l'énergie du moteur 18 aux roues 14A, 14B, et assure de plus différentes fonctions complémentaires : activation/désactivation de la transmission auxiliaire ; mise en sécurité des organes de la transmission auxiliaire pendant le mode désactivé, etc.

Pour l'entraînement des roues 14A, 14B, le dispositif de transmission hydraulique 20 comporte tout d'abord deux sources de fluide sous pression : une pompe principale 24, et une pompe auxiliaire 25 prévue pour maintenir une pression de fluide minimale dans différents conduits auxiliaires du dispositif.

La pompe principale 24 est une pompe réversible à débit variable à plateau oscillant.

Les pompes principale 24 et auxiliaire 25 sont reliées toutes les deux à l'arbre de sortie 21 du moteur 18, et peuvent donc être actionnées conjointement par celui-ci (c'est-à-dire en même temps).

La pompe principale 24 est prévue pour alimenter en fluide sous pression deux moteurs hydrauliques 26A, 26B attelés respectivement aux deux roues 14A, 14B. Pour cela, la pompe 24 présente deux conduits de pompe 28A, 28B, reliés à ses orifices principaux 24A, 24B.

Ces conduits de pompe 28A, 28B peuvent être mis en communication respectivement avec deux conduits de moteur 30, 32. Chacun de ces conduits de moteur a une première partie 301, 321 apte à être reliée à un conduit de pompe, et une deuxième partie dans laquelle chacun se divise en deux branches 302A, 302B, et 322A, 322B respectivement, reliées à des enceintes d'alimentation et d'échappement des moteurs 26A et 26B.

De manière connue en soi, les moteurs 26A, 26B sont des moteurs hydrauliques à pistons radiaux, similaires aux moteurs décrits par exemple dans le brevet français n°2 504 987.

Chacun des moteurs 26A, 26B comporte un arbre de sortie, relié respectivement aux roues 14A, 14B. Sous l'effet de la différence de pression imposée par la pompe principales entre les conduits de pompe, et donc entre les conduits de moteur, en mode assisté les moteurs 26A et 26B délivrent un couple moteur (ou de freinage) qui leur permet d'entraîner les roues 14A, 14B.

La mise en communication des conduits de pompe 28A, 28B et des conduits de moteur 30, 32 est réalisée au moyen d'une valve d'activation 34. Celle-ci présente trois voies amont A, B, C, deux voies aval E et F, et trois positions I, II, III. La valve d'activation 34 comporte en outre deux chambres de commande hydraulique 34A, 34B.

Dans ce texte, les termes 'amont' et 'aval' appliqués aux voies d'une valve désignent en général le sens le plus fréquent de circulation du fluide ou de transmission d'une commande, sans que cela n'exclue d'autres modes de fonctionnement.

Les voies A et C sont reliées respectivement aux conduits de pompe 28A et 28B. La chambre de commande 34A et la voie B sont reliées toutes deux à la voie D d'une valve de commande 50 qui va être décrite plus loin. Les voies E et F sont reliées respectivement aux conduits de moteur 30 et 32 et par suite aux conduits de moteur 302A et 322A, reliés au moteur 26A, et aux conduits de moteur 302B et 322B, reliés au moteur 26B.

La valve d'activation 34 comporte en outre un ressort de rappel qui tend à la maintenir dans la première position I.

Dans la première position I, les voies B, E et F sont reliées, et les voies A et C sont reliées.

Dans la deuxième position II, les cinq voies A, B, C, E et F sont reliées ensemble.

Dans la troisième position III, les voies A et E sont reliées, les voies C et F sont reliées, et la voie B est isolée.

Ainsi, en première position I, les conduits de pompe 28A, 28B sont reliés l'un à l'autre (position de bipasse) ; la pompe est alors réglée sur un débit nul. De plus, les conduits de moteur sont reliés l'un à l'autre, et leur pression leur est imposée par la valve de commande 50, d'une manière qui sera présentée plus loin.

En troisième position III inversement, les conduits de moteurs sont reliés aux conduits de pompe et alimentent les moteurs 26A, 26B pour qu'ils entraînent les roues 14A, 14B. Cette position est adoptée pour placer le véhicule en mode assisté, dans lequel les moteurs 26A, 26B sont dans l'état craboté, hormis pendant les phases transitoires.

L'alimentation en fluide du dispositif 20 se fait de la manière suivante.

L'orifice de refoulement de la pompe auxiliaire 25 est relié à un conduit de gavage 41.

Le conduit 41 est relié aux conduits de pompe 28A, 28B via des clapets anti-retour 42A, 42B. Cette liaison permet d'assurer que la pression dans les conduits de pompe reste à tout moment au niveau de la pression de gavage (pression à l'orifice de refoulement de la pompe 25).

D'autre part, le conduit 41 est relié à un réservoir sans surpression 46, qui est à la pression atmosphérique, via un limiteur de pression 44, ce qui empêche une hausse de pression excessive dans la conduite 41.

De même, les conduits de pompe 28A, 28B sont reliés à la conduite 41 via des limiteurs de pression 48A, 48B, également afin d'éviter toute surpression.

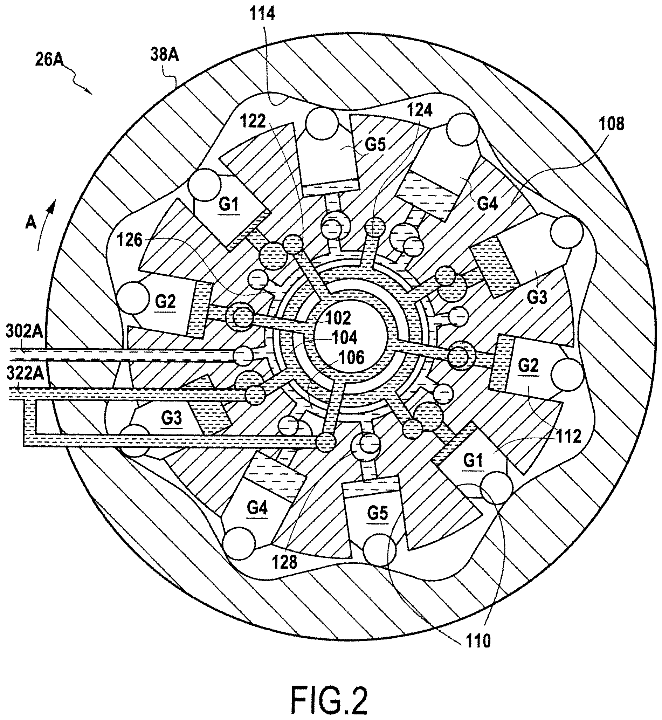

Enfin, à l'intérieur des carters 38A, 38B des moteurs sont aménagés des espaces internes qui communiquent avec des conduits pour le retour de fuites dit conduits de carter 40A et 40B. L'agencement interne des moteurs hydrauliques du dispositif 20 sera détaillé plus loin en relation avec la figure 2.

Les conduits de carter 40A, 40B sont reliés ensemble à un tronçon commun 401, de manière à constituer un conduit de carter 40 comprenant les deux tronçons 40A et 40B reliés respectivement aux moteurs 26A, 26B, ainsi que le tronçon commun 401.

Dans ce qui suit, on considère conventionnellement que l'amont du conduit de carter correspond au côté situé vers les moteurs 26A, 26B.

En aval du tronçon 401, à un embranchement T1, le conduit de carter 40 se divise en deux. Il est relié à un conduit 402 via un clapet anti-retour 80, et à un conduit 404 via une restriction 82.

Le conduit 404 est relié à un réservoir 52 à la pression atmosphérique. La restriction 82, qui limite l'évacuation de fluide vers le réservoir 52, constitue un moyen pour limiter la circulation de fluide sur le conduit de carter.

Le conduit 402 est relié au conduit de gavage 41. La pression dans ce conduit est donc la pression de gavage, qui règne à l'orifice de refoulement de la pompe auxiliaire 25. Le clapet 80 est disposé dans le sens permettant l'évacuation de fluide du carter vers le conduit de gavage 41.

Le dispositif de transmission 20 comporte en outre l'électrovalve de commande 50 citée précédemment, qui permet de le placer en mode assisté ou en mode sans assistance.

Cette électrovalve 50 est disposée sur le conduit de gavage 41. Elle présente deux voies amont A, B, deux voies aval C et D, deux positions I, II, et un ressort de rappel qui tend à la maintenir dans sa position I.

La voie A est reliée à une extrémité du conduit de gavage 41. La voie B est reliée au réservoir sans surpression 52 (qui peut être le même que le réservoir 46). La voie C est reliée à la chambre de commande hydraulique 34B de la valve 34. La voie D est reliée à la chambre hydraulique 34A et à la voie B de la valve 34.

En position I, les voies A et C sont reliées, et les voies B et D sont reliées. En position II, les voies A et D sont reliées, et les voies B et C sont reliées.

Le pilotage du dispositif de transmission hydraulique 20 se fait à l'aide de l'électrovalve 50. On place celle-ci en position II pour activer le dispositif et passer en mode assisté, et en position I pour le désactiver et revenir en mode sans assistance.

En mode sans assistance, les conduits de pompe 28A et 28B sont reliés, via la valve d'activation 34 placée en position I. Les conduits de moteur sont reliés via la voie D de la valve 50 au réservoir 52 et sont maintenus à pression atmosphérique. De même, le conduit de carter étant relié au réservoir 52, la pression de carter reste égale à la pression atmosphérique.

Le passage de la valve 50 de la position II à la position I déclenche l'opération de crabotage des moteurs 26A, 26B.

Lorsque l'on fait passer la valve de commande de la position I à la position II, la pression délivrée par la pompe auxiliaire 25, dite pression de gavage, s'applique dans la chambre hydraulique 34A au lieu de la chambre 34B. Cela fait passer la valve hydraulique 34 de la position I (mode sans assistance) à la position III (mode assisté).

Presque instantanément, la pression de refoulement de la pompe principale se transmet dans le premier conduit de moteur 32, alors que la pression à l'orifice d'aspiration de la pompe 24 s'applique dans le deuxième conduit de moteur 30.

Dans le même temps, la pression dans le carter, qui est égale initialement à la pression atmosphérique, commence à s'élever, car sous l'effet de la pression élevée appliquée dans le premier conduit de moteur, les pistons reliés à ce conduit sont poussés hors des cylindres par la pression de fluide. Une certaine quantité de fluide doit donc être évacuée soudainement des carters des moteurs 26A, 26B. A cause de la restriction 82, l'évacuation de ce fluide via le conduit 404 vers le réservoir 52 est relativement lente. Aussi, la pression dans le conduit de carter 40 s'élève. Lorsqu'elle atteint la pression dans le conduit de gavage 41, le clapet 80 s'ouvre et permet l'évacuation de l'excédent de fluide dans le conduit de gavage. La pression dans le conduit de carter 40 ne peut donc pas dépasser la pression de refoulement de la pompe auxiliaire 25.

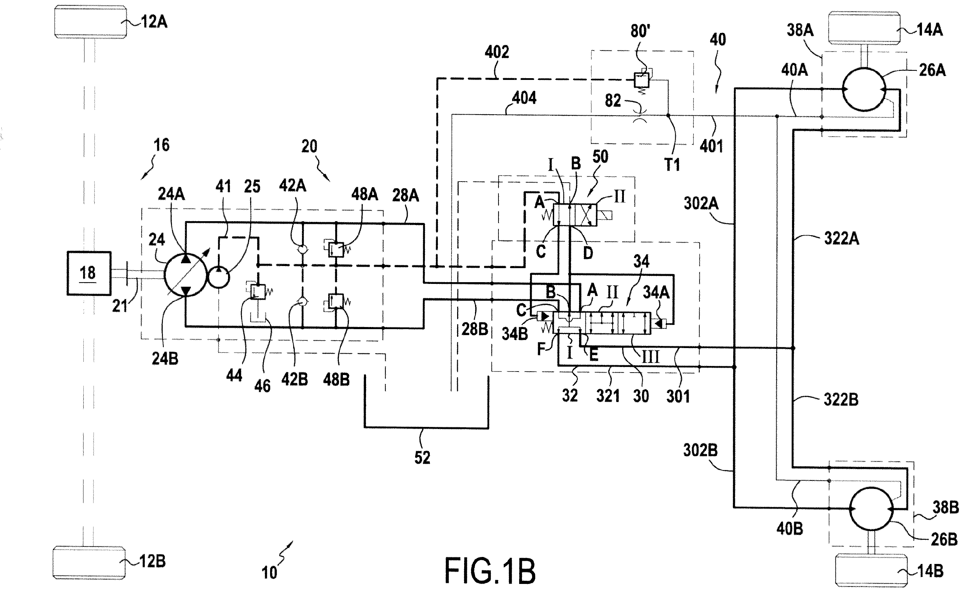

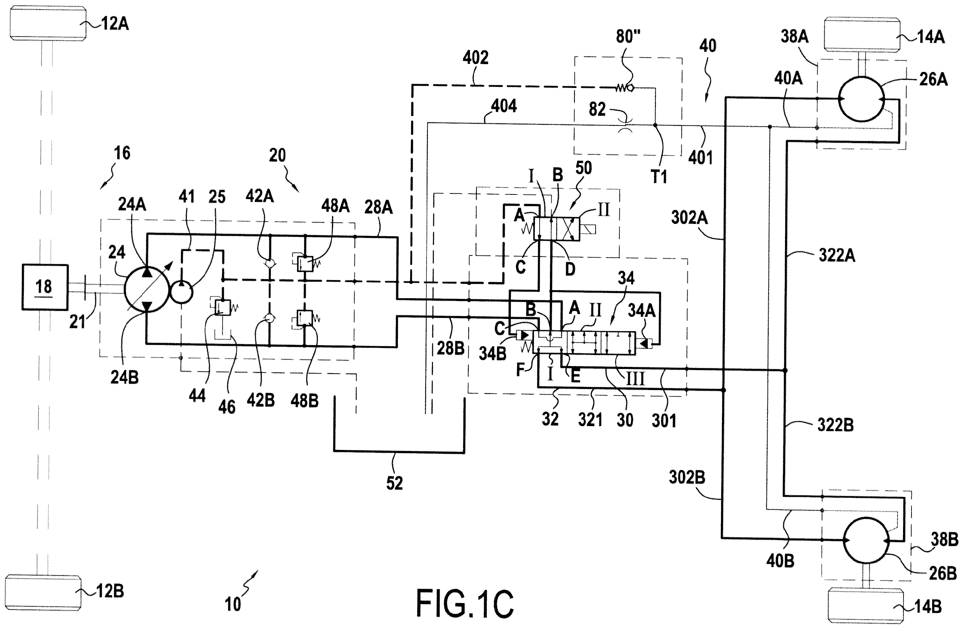

Les figures 1B et 1C représentent deux dispositifs identiques en tous points au dispositif de la figure 1A, à l'exception du clapet anti-retour 80. Ces figures présentent deux composants susceptibles de remplacer le clapet anti-retour 80 :
U ne première possibilité (fig. 1B) consiste à remplacer celui-ci par un limiteur de pression 80'. Celui-ci s'ouvre progressivement au fur et à mesure que la pression en amont atteint et dépasse une valeur prédéterminée, permettant ainsi l'évacuation de fluide. Dans l'exemple présenté l'évacuation de fluide se ferait vers le conduit de gavage, mais elle pourrait se faire également vers le réservoir sans surpression 52.

Une deuxième possibilité (fig. 1C) consiste à remplacer le clapet anti-retour 80 par un clapet taré 80". Celui-ci s'ouvre alors lorsque la pression en amont (la pression de carter) dépasse la pression dans la ligne de gavage de plus d'une valeur prédéterminée. Au moment du crabotage, la ligne de gavage alimente le second conduit de moteur, afin d'y maintenir une pression suffisante pour éviter la cavitation. Le fait de diriger le fluide provenant des carters vers le conduit de gavage, et par là vers le second conduit de moteur, permet de fournir du fluide au second conduit de moteur, et ainsi de faciliter le maintien d'une pression suffisante dans ce conduit, malgré la chute de pression causée par l'aspiration de la pompe principale.

La séquence de sortie des pistons hors des cylindres lors du crabotage va maintenant être présentée en relation avec la figure 2.

La figure 2 représente, en coupe transversale, le moteur 26A (identique au moteur 26B).

Ce moteur 26A se caractérise par le fait qu'il présente trois enceintes d'alimentation/échappement en forme de gorges 102, 104, 106, formées à l'intérieur d'un bloc-cylindres 108. Aussi, ce moteur pourrait être exploité comme étant composé de deux sous-moteurs, et pourrait fonctionner avec plusieurs cylindrées et non une seule.

On note à cet égard que l'invention peut naturellement être appliquée à des moteurs comprenant plusieurs sous-moteurs. Dans ce cas, l'invention peut être appliquée indépendamment pour le crabotage de n'importe lequel ou lesquels des sous-moteurs.

Dans le moteur 26A, les gorges 102, 104 sont reliées ensemble et reliées au conduit de moteur 322A, et la gorge 106 est reliée au conduit de moteur 302A.

Le moteur 26A comprend :
- dans un carter 38A, le bloc-cylindres 108 précité, qui comprend un ensemble de dix cylindres 110, chacun de ces cylindres contenant un piston coulissant 112 et étant disposé radialement par rapport à un axe de rotation du moteur ; et
- une came 114 ondulée formant huit lobes, formée à l'intérieur du carter 38A, et servant d'organe de réaction pour les pistons 112.

Le moteur 26A est à came externe et bloc-cylindres interne ; l'invention peut être appliquée à un moteur à came interne et bloc-cylindres externe. Par ailleurs, le bloc-cylindres peut être fixe et la came tournante, ou inversement.

L'alimentation et l'échappement de fluide du moteur 26A sont assurés via les deux conduits de moteur 322A et 302A par les gorges 102, 104, 106. Chacune des gorges 102, 104, 106 communique avec des conduits de distribution radiaux, à savoir respectivement quatre, quatre et six conduits de distribution radiaux 122, 124, 126.

Ces conduits de distribution 122, 124, 126 sont aptes à être mis successivement en relation avec des conduits de cylindres 128, de manière connue, en fonction de la position relative du bloc-cylindres 108 par rapport à la came 114.

Pour cela, les conduits de cylindres 128 débouchent sur une surface plane extérieure du bloc-cylindres 108, dite surface de communication. En regard de cette surface de communication, le moteur 26A comporte un distributeur comportant une surface plane, dite surface de distribution, qui subit une rotation relative par rapport à la surface de communication lorsque le bloc-cylindres tourne. Les conduits de distribution débouchent sur la surface de distribution.

Aussi, lors de la rotation relative indiquée précédemment, chaque conduit de cylindre 128 est mis en relation alternativement avec un conduit de distribution 122 ou 124, puis avec un conduit de distribution 126. La pression dans les conduits de cylindre est portée successivement à la pression du premier conduit de moteur, puis à celle du deuxième conduit de moteur, puis à nouveau à celle du premier conduit de moteur, etc.

La mise en communication entre conduits de cylindre et conduits de distribution se fait de manière progressive, la section de passage, dans le plan des surfaces de distribution ou de communication, partant d'une valeur nulle, s'élevant progressivement jusqu'à atteindre un maximum, puis revenant progressivement à une valeur nulle.

L'effet de ces changements de pression va maintenant permettre de mieux comprendre le déroulement de l'opération de crabotage.

A l'instant initial t0 de l'opération de crabotage (figure 2), tous les pistons sont rentrés dans les cylindres. On considère que le bloc-cylindres 108 tourne par rapport à la came 114 dans le sens indiqué par la flèche A, et on suppose de plus que c'est le conduit de moteur 322A qui est porté à la plus haute pression de la pompe (pression de crabotage).

A l'instant t0, on peut distinguer cinq groupes de pistons, plus ou moins incités à sortir de leurs cylindres en fonction de la section de passage entre leurs conduits de cylindre et de distribution :
- Deux pistons 'G1' commencent tout juste à être reliés au premier conduit de moteur 322A, et ne sont donc presque pas incités à sortir ;
- Deux pistons 'G2' sont très largement reliés au conduit 322A, et sont fortement sollicités pour sortir ;
- Deux pistons 'G3' sont encore reliés au conduit 322A, mais la section de passage se réduit, et ils ne sont donc plus tellement incités à sortir ;
- Deux pistons `G4' sont reliés au deuxième conduit de moteur 302A ;
- Deux pistons 'G5' sont encore pour quelques instants reliés au conduit 302A.

A l'instant t0, la pression dans le carter est égale à la pression atmosphérique.

Dès que la pression de refoulement de la pompe 24 s'applique dans le conduit 322A, les pistons des cylindres reliés à ce conduit commencent ou non leur sortie, selon l'importance de la pression qu'ils subissent.

Par conséquent, la pression de carter commence immédiatement à s'élever, la restriction 82 produisant ses effets et limitant l'évacuation du fluide du carter. Sous l'effet de cette contre-pression, les pistons G4 et G5 (dont le mouvement n'a pas été précisé précédemment) sont en fait incités à rester dans leurs cylindres, et ne sortent pas, car leurs pressions de cylindre égales à la faible pression du second conduit de moteur 302A sont inférieures à la pression de carter.

En résumé, dans la phase initiale du crabotage, les pistons G2 sortent rapidement de leurs cylindres ; les autres pistons G1 et G3-G5 ne sortent pas ou quasiment pas de leurs cylindres.

L'opération de crabotage se poursuit de la manière suivante.

A chaque seizième de tour, comme les conduits de distribution sur la périphérie de la surface de distribution sont reliés alternativement au premier et au deuxième conduit de moteur, chacun des conduits de cylindres passe de la pression du premier conduit à celle du deuxième conduit ou inversement.

A chaque instant, seuls les pistons fortement incités à sortir sortent de leurs cylindres. En effet, la contre-pression régnant dans le carter contraint les pistons dont les conduits de cylindre ne sont pas pleinement reliés au premier conduit de moteur, à rester à l'intérieur des cylindres. Il s'ensuit que les pistons sortent par paires, puisqu'à un instant donné, seul deux cylindres étant pleinement en contact à un instant donné avec le conduit de moteur 322A.

En fonction des réglages du dispositif, et notamment, du dimensionnement des moyens pour limiter la circulation de fluide (la restriction 82), à la fin de leur mouvement de sortie, soit les pistons atteignent la came, soit s'arrêtent avant d'être entrés en contact avec celle-ci. En général, les pistons n'atteignent pas la came lors de leur premier mouvement de sortie, mais plutôt lors du second mouvement.

Pour chaque piston, la fin du mouvement de sortie a lieu lorsque le cylindre du piston n'est plus relié au premier conduit de moteur.

A partir de ce moment-là, la contre-pression tend à faire rentrer le piston à l'intérieur de son cylindre. Le piston commence donc spontanément un mouvement de rentrée à l'intérieur du cylindre. Pendant ce mouvement, si celui-ci ne se fait pas suffisamment rapidement, le piston est susceptible d'être heurté par la came. Cependant, comme le piston est en train de rentrer dans son cylindre, la violence du choc entre la came et le piston est nettement atténuée.

Au fur et à mesure des sorties des différents pistons, une quantité croissante de fluide est évacuée des carters des moteurs, et une quantité de fluide correspondante est injectée dans la boucle fermée reliant conduits de pompe et conduits de moteur.

Il s'ensuit que très rapidement, les pistons les plus sollicités pour sortir sont suffisamment sollicités pour aller, au cours de leur sortie, jusqu'à entrer en contact avec la pompe. Ainsi peu à peu, l'ensemble des pistons sortent et finalement, parviennent au contact de la came.

Le point clef de l'invention réside dans la contre-pression dans le carter, qui empêche la sortie simultanée des pistons mais au contraire favorise leur sortie rapide et échelonnée. Les pistons ne sortent que deux par deux, ce qui permet que le volume de fluide à évacuer du carter reste relativement faible. Ce volume est aussi le volume que doit fournir aux conduits de moteur la pompe auxiliaire 25.

Comme ce volume est relativement faible, le débit de la pompe 25 suffit pour maintenir une pression élevée dans le deuxième conduit de moteur 322A, grâce à quoi tous les pistons qui ont atteint la came restent en contact avec celle-ci.

On note enfin que, dès que la pression de carter atteint la pression de refoulement de la pompe auxiliaire 25, l'excédent de fluide évacué par le conduit de carter est retourné dans le conduit de gavage 41, et s'ajoute ainsi au fluide refoulé par la pompe 25 dans les conduits de moteur.

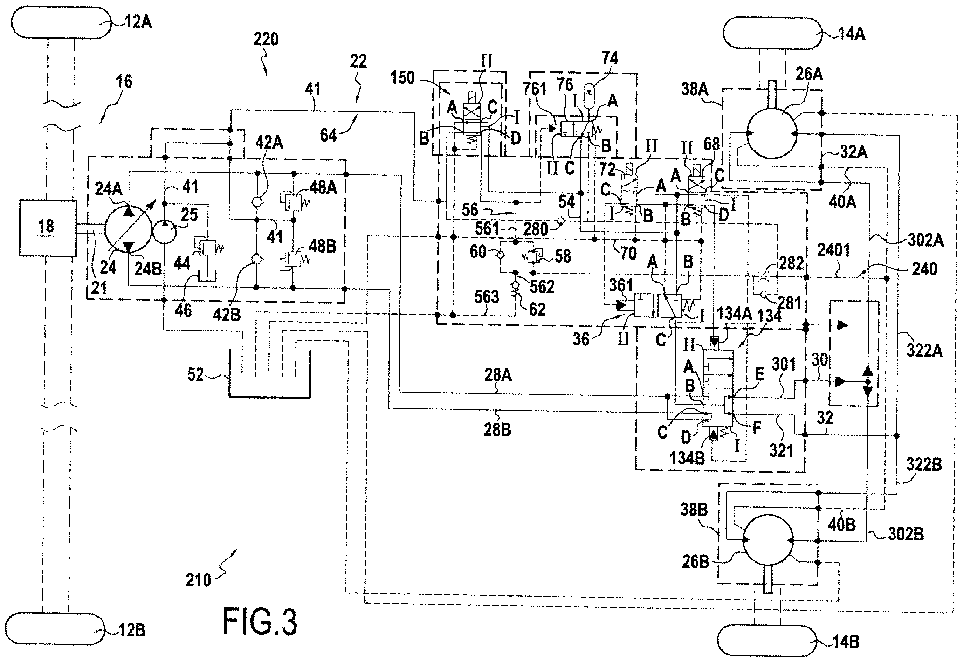

Les figures 3 à 6 présentent quatre modes de réalisation de dispositifs selon l'invention. Ces dispositifs sont très similaires les uns aux autres et seront décrits principalement en relation avec la figure 3. Les éléments identiques ou similaires portent les mêmes références dans ces différentes figures.

La différence entre ces différents modes de réalisation réside essentiellement dans l'agencement des moyens pour limiter la circulation de fluide, et des clapets anti-retour notamment de remplissage et de limitation de pression (références 280, 281 et 282 dans la figure 3).

La figure 3 représente un véhicule 210 sur lequel est monté un dispositif 220 selon l'invention.

Le véhicule 210 est similaire au véhicule 10 précédemment présenté. Entre les conduits de pompe 28A, 28B et les conduits de moteur 30, 32 est interposée une valve d'activation 134. Celle-ci présente quatre voies amont A, B, C, D, deux voies 'aval' E et F, deux positions I, II, deux chambres hydrauliques de commande 134A, 134B.

Les voies A et D sont reliées au conduit de pompe 28A. La voie C est reliée au conduit de pompe 28B. Les voies E et F sont reliées aux conduits de moteur 30 et 32. La voie B est reliée à une valve de commande de pression 36.

La valve d'activation 134 comporte également un ressort de rappel qui tend à la maintenir dans la première position I.

Dans la première position I, la voie A est isolée, la voie B est reliée aux voies E et F, et les voies C et D sont reliées.

Dans la deuxième position II, les voies B et D sont isolées, les voies A et E d'une part, C et F d'autre part, sont reliées respectivement (les voies A et D restant reliées l'une à l'autre ainsi qu'à la conduite de pompe 28A).

Ainsi, en première position I, les conduits de pompe 28A, 28B sont reliés l'un à l'autre (position de bipasse) ; la pompe est alors réglée sur un débit nul. Par ailleurs, les conduits de moteur sont reliés l'un à l'autre, et leur pression est celle qui leur est imposée par la valve de commande de pression 36, d'une manière qui sera présentée plus loin.

En deuxième position II en revanche, les conduits de moteurs sont reliés aux conduits de pompe et alimentent les moteurs 26A, 26B pour qu'ils entraînent les roues 14A, 14B, ce qui constitue le mode assisté du dispositif.

Une électrovalve dite valve de bipasse 150 est disposée sur le conduit de gavage. Celle-ci présente deux voies amont A, B, deux voies aval C et D, et deux positions I, II.

La voie A est reliée au réservoir sans surpression 52. La voie B est reliée à une extrémité du conduit de gavage 41. La voie C est reliée à un conduit 54 dite 'conduit de transmission' dont le rôle va être détaillé plus loin. La voie D est reliée à un conduit 56 dit 'conduit de bipasse'.

La valve de bipasse 150 comporte également un ressort de rappel qui tend à la maintenir dans la première position I.

Dans la première position I, les voies A et C sont reliées, et les voies B et D sont reliées.

Dans la deuxième position II, les voies A et D sont reliées, et les voies B et C sont reliées.

La première position I est la position par défaut pour la valve de bipasse 150 et est la position 'désactivée', correspondant au mode sans assistance (avance normale). Dans cette position, le fluide provenant de la pompe de gavage est dirigé vers le conduit de bipasse 56, et le conduit de transmission 54 est maintenu à une pression égale à la pression atmosphérique.

La deuxième position II de la valve de bipasse est le mode activé du dispositif de transmission 220, qui correspond au mode 'assisté' pour le véhicule. Dans cette deuxième position, la valve de bipasse dirige le flux de la pompe de gavage vers le conduit de transmission 54, qui est un conduit auxiliaire du dispositif 220.

Le conduit de bipasse 56 présente trois parties, une partie amont 561, une partie médiane 562 et une partie aval 563.

Les parties amont 561 et médiane 562 sont reliées via un limiteur de pression 58 et un clapet anti-retour 60 montés en parallèle. Le clapet anti-retour est monté dans le sens qui empêche le déplacement du fluide vers la partie médiane 562.

Le limiteur de pression 58, commandé par sa pression amont, permet de maintenir dans la partie amont 561 une pression minimale, choisie égale à 10 Bar.

Les parties médiane 562 et aval 563 sont reliées via un clapet taré 62. Celui-ci garantit le maintien d'une pression minimale dans la partie médiane, choisie égale à 0,5 Bar.

Le conduit de gavage 41 associé au conduit de bipasse 56 forment une liaison dite liaison de bipasse 64. Celle-ci relie donc l'orifice de refoulement de la pompe auxiliaire 25 et le réservoir sans surpression 52.

Comme on l'a vu, le conduit de gavage 41 est relié aux conduits de pompe 28A et 28B (via les clapets 42A, 42B).

Aussi en mode assisté (valve 50 en position I), la pression de 10Bar (10,5 Bar plus précisément) maintenue par le limiteur de pression 58 dans la partie amont de la liaison de bipasse (regroupant le conduit de gavage 41 et la partie amont 561 du conduit de bipasse) s'applique dans les conduits de pompe. Cette pression, qui s'applique aux conduits de pompe via les clapets anti-retour 42A, 42B est suffisamment élevée pour que la pompe 24 soit protégée. Pour cette raison, la pression maintenue par le limiteur 58 est dite pression de protection de pompe, et la partie amont de la liaison de bipasse, partie de protection de pompe.

La partie médiane 562 du conduit de bipasse 56 est reliée au tronçon commun 2401 du conduit de carter 240. Aussi, la pression dans le conduit de carter reste à tout moment au plus égale à 0,5 Bar (pression de tarage du clapet 62). Cependant, de manière transitoire la pression peut monter davantage dans cette partie médiane 562, du fait que le débit maximal que le clapet 62 peut évacuer est relativement limité. Cet effet peut d'ailleurs s'ajouter à celui de la restriction 282.

La valve d'activation 34 est pilotée par une première valve de pilotage 68.

Celle-ci est une électrovalve présentant deux voies amont A, B, et deux voies aval C, D, et deux positions, I, II.

La voie A est reliée au conduit de transmission 54. Celui-ci transmet une pression de gavage que la première valve de pilotage 68 peut utiliser pour piloter la valve d'activation. La voie B est reliée à un conduit d'évacuation 70 lui-même relié au réservoir sans surpression 52. La voie C est reliée à la chambre hydraulique 134B de la valve 134, dont la montée en pression tend à faire passer la valve d'activation 134 dans sa première position (mode sans assistance) ; la voie D est reliée à l'autre chambre 134A de la valve 134, dont la montée en pression au contraire tend à faire passer la valve 134 dans sa deuxième position (mode assisté).

La première valve de pilotage 68 comporte également un ressort de rappel qui tend à la maintenir dans la première position I.

Dans la première position I, les voies A et C sont reliées, et les voies B et D sont reliées ; et dans la deuxième position II, les voies A et D sont reliées, et les voies B et C sont reliées.

Comme la première valve de pilotage 68 est située en aval de la valve de bipasse 150, elle ne joue un rôle actif que lorsque la valve de bipasse est en position II, et qu'ainsi la pression de gavage règne dans le conduit de transmission 54.

Dans ces conditions, une action sur la valve 68 permet de faire passer la valve d'activation en position I ou II, suivant que la valve de pilotage est elle-même placée en position I ou II. En effet, en position I de la première valve de pilotage 68, la pression de gavage est transmise dans la chambre 134A, et la pression atmosphérique est maintenue dans la chambre 134B, de telle sorte que la valve d'activation 134 se place en position I (mode sans assistance) ; et inversement.

Le dispositif 22 comporte en outre une deuxième valve de pilotage 72, qui pilote la valve de commande de pression 36.

Précisons d'abord l'agencement de la valve hydraulique de commande de pression 36. Celle-ci comporte deux voies amont A et B, une voie aval C, et une chambre de commande hydraulique 361. La voie C de la valve 36 est reliée à la voie B de la valve d'activation 134.

La valve 36 présente deux positions I et II.

Dans la première position I, les voies A et C sont reliées, et la voie B est isolée. Dans la deuxième position II, les voies B et C sont reliées, et la voie A est isolée.

La valve 36 comporte également un ressort de rappel qui tend à la maintenir dans la première position I.

La deuxième valve de pilotage 72 est une électrovalve présentant deux voies amont A et B, et une voie aval C. Elle peut prendre deux positions I et II.

Les voies A et B sont reliées respectivement au conduit de transmission 54, et au conduit d'évacuation 70. La voie C est reliée à la chambre de commande hydraulique 361 de la valve de commande de pression 36.

La deuxième valve de pilotage 72 comporte également un ressort de rappel qui tend à la maintenir dans la première position I.

Dans sa première position I, la deuxième valve de pilotage 72 relie les voies B et C, A restant isolée. Dans la deuxième position II, la deuxième valve de pilotage 72 relie les voies A et C, B restant isolée.

Comme pour la première valve de pilotage, les valves 36 et 72 ne jouent de rôle actif que pendant les phases d'assistance, c'est-à-dire ici lorsque la valve de bipasse 150 est placée en position II. La pression de gavage règne alors dans le conduit de transmission 54 (relié à la voie A de la valve 72), alors qu'une pression égale à la pression atmosphérique règne dans le conduit d'évacuation 70 (relié à la voie B de la valve 72).

Dans ces conditions, la valve 72 permet d'appliquer soit la pression de gavage soit une pression égale à la pression atmosphérique dans la chambre de commande hydraulique 361 de la valve 36, selon qu'elle est placée dans sa première ou sa deuxième position. La pression dans la chambre 361 impose à la valve 36 de prendre sa première position I, si la valve 72 est dans sa première position I, ou sa deuxième position, si la valve 72 est dans sa deuxième position II.

Cet agencement permet donc de sélectionner la pression que l'on veut appliquer à la voie B de la valve d'activation 134. Quand celle-ci est dans sa première position I, la pression dans la voie B est transmise aux conduits de moteur 30, 32. En revanche dans la deuxième position II de la valve d'activation 134, la voie B est isolée.

Enfin, le dispositif 220 comporte une source de fluide sous pression additionnelle, à savoir un accumulateur de fluide 74, dont le fonctionnement est régulé par une valve d'accumulateur 76, disposée sur un conduit d'accumulateur qui relie l'accumulateur 74 au reste du dispositif.

La valve d'accumulateur 76 comporte une voie amont A, deux voies aval B et C, et une chambre de commande hydraulique 761. La voie A est reliée à l'accumulateur. La voie B est reliée au tronçon commun 2401 du conduit de carter 240. Cela permet, pour décraboter les moteurs 26A, 26B, d'injecter le fluide de l'accumulateur dans les carters des moteurs, pour y faire remonter la pression, via le conduit de carter 240.

La voie C est reliée au conduit de transmission 54.

La valve d'accumulateur 76 peut occuper une première position I, dans laquelle les voies A et C sont reliées, et la voie B est isolée ; et une deuxième position II, dans laquelle les voies A et B sont reliées, et la voie C est isolée.

La valve d'accumulateur 76 comporte un ressort de rappel qui tend à la faire revenir dans sa première position I.

La chambre de commande 761 de la valve d'accumulateur 76 est reliée à la partie amont 561 du conduit de bipasse 56. Il résulte de cette liaison que :
- Si la valve de bipasse 150 est en position I (mode sans assistance), la pression de gavage (dont la valeur dans ce mode est fixée à une valeur dite 'de protection de pompe') s'applique dans la chambre hydraulique 761 et ainsi, la valve d'accumulateur se place dans la position II, dans laquelle l'accumulateur est relié à la partie médiane de la liaison de bipasse, maintenue à une pression de 0,5 Bar (pression de protection de moteur). Ainsi, l'accumulateur n'est pas réellement mis sous pression et ne présente aucun danger ; en revanche,
- Si la valve de bipasse 50 est en position II (mode assisté), une pression égale à la pression atmosphérique est appliquée dans la chambre hydraulique 761. La valve d'accumulateur se place en position I, c'est-à-dire que l'accumulateur est relié au conduit de transmission 54, et est donc porté à la pression de gavage.

Du fait de la liaison entre la voie D de la valve de bipasse et la chambre de commande hydraulique 761, la valve d'accumulateur et la valve de bipasse sont couplées, et la position de la valve de bipasse impose sa position à la valve d'accumulateur.

En aval du point auquel la voie B de la valve 76 est reliée au conduit de carter 240 (c'est-à-dire entre ce point et la partie médiane 562 du conduit de bipasse 56), le conduit de carter 240 est dédoublé sur un court tronçon.

Sur une première branche de ce tronçon est interposée une restriction 282 ; sur la deuxième branche de ce tronçon est interposé un clapet anti-retour 281 de remplissage du carter, monté de manière à permettre l'injection de fluide dans les carters des moteurs 26A, 26B.

La restriction 282 constitue pour le dispositif 220 un moyen pour limiter la circulation de fluide dans le conduit de carter 240.

Le clapet 281 permet, lors du décrabotage des moteurs, qu'une partie du fluide circulant dans la partie médiane 562 du conduit de bipasse soit dirigée vers les conduits de carter. Cependant, au moins dans une première phase du décrabotage, une grande partie du fluide injecté dans les carters peut être du fluide fourni par l'accumulateur 74 via la voie B de la valve 76.

Avantageusement, les moyens de crabotage sont aptes, pendant l'opération de décrabotage du moteur, à relier l'accumulateur 74 au conduit de carter 240 du côté du carter par rapport à la première restriction 282 et/ou au clapet anti-retour 281 de remplissage du carter. Comme le fluide fourni par l'accumulateur ne transite pas par la restriction 282, le débit de fluide fourni peut être important, ce qui favorise un décrabotage rapide.

Enfin, la liaison entre la voie B de la valve 76 et le tronçon 2401 est reliée au conduit de gavage 41 via un clapet anti-retour de limitation de pression 280. Ce dernier est monté de manière à permettre le passage de fluide depuis ladite liaison vers le conduit de gavage 41, sans passer par la valve 150. Cela contraint donc la pression dans le conduit de carter 240 à ne pas dépasser la pression dans le conduit de gavage 41.

Le clapet 280 est optionnel, la restriction 282 pouvant être dimensionnée pour assurer seule l'évacuation du fluide en provenance des carters lors du crabotage.

Le dispositif 220 est mis en oeuvre de la manière suivante.

La valve de bipasse 50, la valve d'activation 134, la valve de commande de pression 36, les premières et deuxième valves de pilotage 68 et 72 constituent les organes principaux des moyens de crabotage du dispositif 220.

Le dispositif de transmission hydraulique 22 est mis en oeuvre en réalisant une suite d'opérations d'activation ou de désactivation des différentes valves du dispositif.

Ces différentes opérations peuvent être pilotées de manière automatique, à partir de la demande d'activation (ou respectivement de désactivation) de l'assistance par le conducteur du véhicule, par une unité de commande électronique ou ECU non représentée.

### Mode sans assistance

En mode sans assistance, la valve de bipasse 150 est en position I, et le fluide délivré par la pompe de gavage 25 circule suivant la liaison de bipasse 64 pour retourner au réservoir 52. Il suit ainsi un circuit relativement court, sans solliciter les diverses valves du dispositif 220 (à l'exception de la valve de bipasse 50). La valve d'accumulateur 76 est en position II. L'accumulateur se vide via le clapet 62 de la liaison de bipasse. Les valves d'activation 134, de pilotage 68 et 72, de commande de pression 36 sont en position I. La pression de protection de pompe règne dans la partie amont de la liaison de bipasse 64, et par suite dans les conduits de pompe, ce qui permet de protéger la pompe principale 24. Celle-ci est entraînée par le moteur 18, mais ne débite pas.

Le conduit de carter 240 est relié à la partie médiane 562 du conduit de bipasse, dans laquelle règne une pression de 0,5 Bar. Cette pression est suffisante (et choisie dans ce but) pour garantir que les pistons demeurent en position rentrée à l'intérieur des cylindres.

### Activation de l'assistance

Pour activer l'assistance hydraulique, le conducteur envoie une commande d'assistance qui active la transmission auxiliaire 220.

Pour cela, l'unité de contrôle électronique ECU active la valve de bipasse 50 et la place en position II.

La valve d'accumulateur 76 réagit immédiatement et passe de la position II à la position I. L'accumulateur se trouve donc relié à la pompe de gavage via le conduit de gavage et le conduit de transmission 54. Il se remplit et atteint rapidement la pression délivrée par la pompe de gavage.

### Synchronisation de la pompe et sortie des pistons

Lorsque l'accumulateur est plein, l'ECU déclenche la synchronisation de la pompe principale 24, en augmentant progressivement la cylindrée de la pompe, jusqu'à une valeur cible à laquelle la cylindrée est stabilisée. Cette valeur cible est déterminée par l'ECU de manière à ce que la pompe puisse entraîner les moteurs 26A et 26B à une vitesse de rotation égale à celle des roues du véhicule.

L'opération de crabotage commence alors, en activant la valve de pilotage 68, qui passe en position II. La pression de gavage s'applique donc dans la chambre 134A et non dans la chambre 134B ; la valve d'activation 134 passe donc de la position I à la position II. Ainsi, les conduits de pompe 28A, 28B sont mis en relation avec les conduits de moteur 30, 32.

Les pistons, qui étaient jusque là rentrés à l'intérieur des cylindres, sortent alors de leurs cylindres, suivant la séquence présentée précédemment en relation avec la figure 2. Ils atteignent donc progressivement leurs positions de travail en contact avec la came.

Au cours de l'opération de crabotage, pendant la sortie des pistons hors des cylindres, le conduit de carter 240 évacue le fluide de l'espace interne des moteurs 26A, 26B vers le réservoir 52.

Avantageusement pendant cette phase, l'accumulateur 74 est mis en ligne sur le conduit de transmission 54 en même temps que la pompe de gavage 25 pour fournir du fluide et remplir les conduits de moteur 30 et 32. Ainsi, l'accumulateur facilite et accélère le remplissage et la montée en pression des conduits de moteur, et permet donc un crabotage rapide des moteurs 26A, 26B.

Pendant la phase d'assistance, l'accumulateur 74 reste relié au conduit de transmission 54 et reste soumis à la pression de gavage.

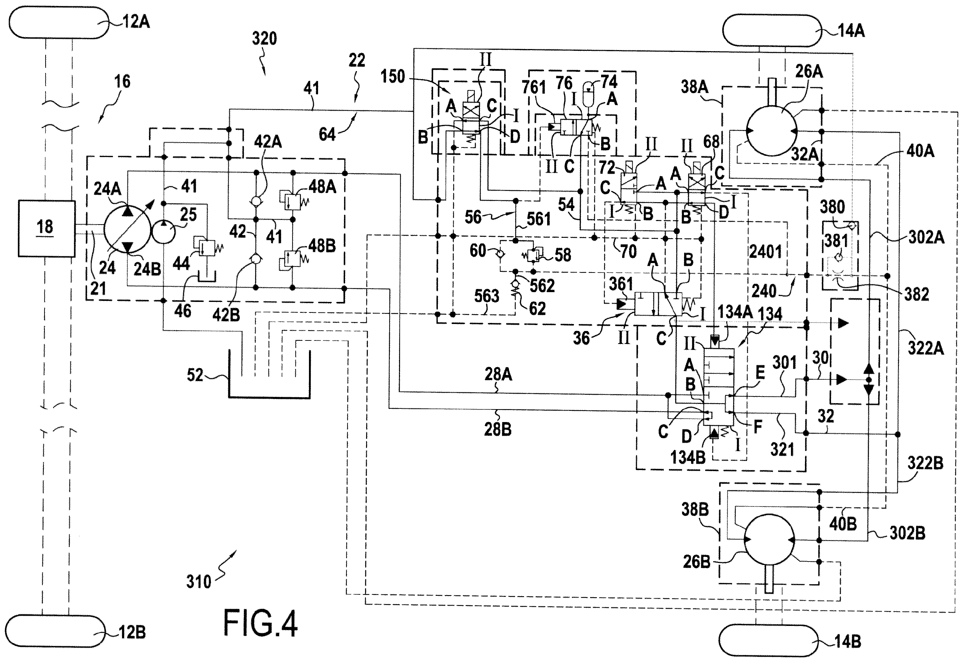

La figure 4 représente un véhicule 310 sur lequel est monté un dispositif 320 conforme à l'invention.

Le dispositif 320 comporte une restriction 382, des clapets anti-retour 380 et 381 ayant sensiblement les mêmes fonctions que les éléments correspondants 282, 280, 281 du deuxième mode de réalisation.

Le clapet anti-retour de remplissage 381 et la restriction 382 sont montés en parallèle sur un tronçon dédoublé du tronçon commun 3401 du conduit de carter 340.

Ce tronçon dédoublé, et donc la restriction 382, sont situés entre le point où la voie B est reliée au conduit de carter 340 et les carters.

Aussi, la restriction 382 est disposée sur le conduit de carter 340 entre le carter (les carters 38A, 38B) et l'accumulateur 74. Pendant l'opération de crabotage du moteur, le fluide évacué du carter ne peut donc être dirigé vers l'accumulateur 74 que via la restriction 382, ce qui permet d'éviter les pics de pression dans l'accumulateur.

Le clapet anti-retour de limitation de pression 380, quant à lui, est relié en aval au conduit de gavage 41, et en amont au conduit de carter 340, également entre les carters et le tronçon dédoublé. Il permet donc l'évacuation de fluide hors des carters sans que ce fluide n'ait à transiter par la restriction 382 (ni par le clapet de remplissage 381, qui ne permet pas le passage de fluide dans ce sens).

Les clapets anti-retour 280 et 281, ainsi que la restriction 282, sont rassemblés dans un même corps de valve.

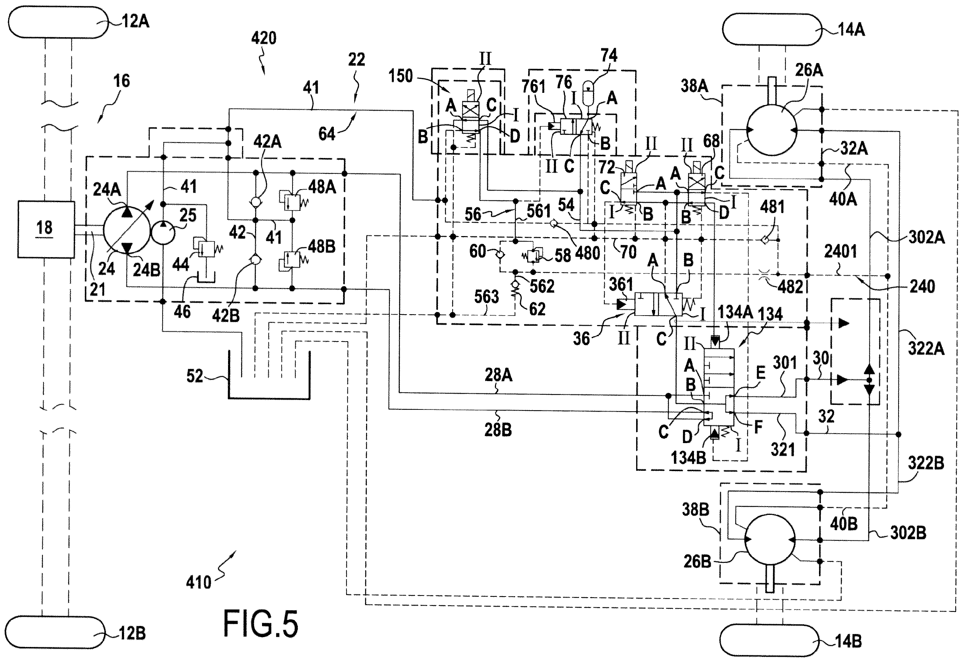

Le dispositif 420 embarqué sur un véhicule 410 et illustré par la figure 5 comporte une restriction 482, des clapets anti-retour 480 et 481 ayant les mêmes fonctions que les éléments correspondants 282, 280 et 281 du deuxième mode de réalisation.

Le clapet anti-retour de limitation de pression 480, et la restriction 482, sont identiques au clapet 280 et à la restriction 282 du deuxième mode de réalisation (fig.3).

Le clapet anti-retour de remplissage 481 en revanche est raccordé de manière spécifique. Ainsi il est raccordé en aval, non pas à la partie médiane 562 du conduit de bipasse, mais directement au réservoir sans pression 52, via le conduit d'évacuation 70. Le conduit 70 est de plus relié à la voie A de la valve de commande de pression 36.

Lors du décrabotage, les valves 72, 36 et 34 sont placées en position I. A cet instant, les conduits de moteur 30, 32 sont reliés au conduit d'évacuation 70 et évacuent une partie du fluide contenu dans les cylindres, lors de la rentrée des pistons dans les cylindres. Le fluide évacué via la ligne 70 est dirigé via le clapet 481 vers les carters des moteurs 26A et 26B. Le conduit 70 agit alors comme ligne d'apport de fluide.

De préférence, l'opération de décrabotage peut être réalisée en deux étapes :
Dans une première étape, le fluide évacué des cylindres est dirigé vers les carters 38A, 38B via le clapet de remplissage 481, comme cela a été indiqué.

Après un bref laps de temps, après qu'un certain volume de fluide a été ainsi transvasé, la valve 150 est désactivée, passant en position I et faisant passer la valve d'accumulateur 76 en position II. L'accumulateur est ainsi mis en ligne avec le conduit de carter via la voie B de la valve 76, et injecte du fluide dans les conduits de carter pour y maintenir une pression relativement élevée et accélérer le décrabotage.

Ainsi dans ce mode de réalisation, pour réaliser le décrabotage du moteur, les moyens de crabotage sont aptes dans une première étape, à relier les conduits de moteur au conduit de carter, et dans une deuxième étape, à relier l'accumulateur au conduit de carter.

Cette séquence permet d'accélérer le décrabotage et de réduire la taille de la pompe de gavage du dispositif.

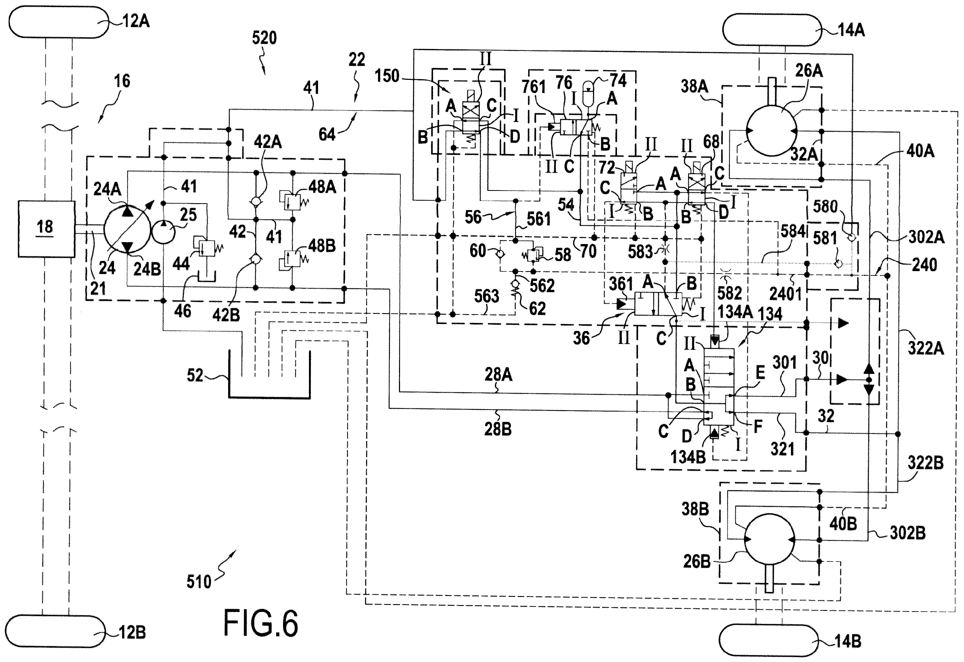

La figure 6 présente un autre dispositif 510 selon l'invention, analogue à ceux des figures 3 à 5.

Une restriction 582, de même fonction que la restriction 282, est disposée sur le conduit de carter 240.

Dans ce mode de réalisation, un clapet 580 anti-retour de limitation de pression analogue au clapet 280 est monté, comme ce dernier, sur un conduit reliant le conduit de gavage 41 au conduit de carter 240, et joignant ce dernier en amont (par rapport à un flux de fluide s'évacuant des carters) de la restriction 582.

En outre, le dispositif 520 comporte un clapet anti-retour de remplissage 581 analogue au clapet 481, agencé dans le même corps de valve que le clapet 580, et disposé de la manière suivante :
La voie A de la valve 36 est reliée au conduit d'évacuation 70. Une restriction 583 est disposée sur cette liaison que l'on peut appeler ligne d'évacuation au moment du décrabotage. Entre la restriction 583 et la valve 36, une liaison 584 de récupération de fluide montée en dérivation sur la ligne d'évacuation relie la ligne d'évacuation au conduit de carter 240 en amont de la restriction 582, via le clapet anti-retour de remplissage 581.

Cette liaison de récupération de fluide 584 permet de diriger une partie du fluide provenant des conduits de moteur 30, 32, vers le conduit de carter 240, lors du décrabotage des moteurs.

Ainsi dans ce dispositif 520, 15 les moyens de crabotage sont aptes pour réaliser le décrabotage du moteur ou des moteurs, à relier les conduits de moteur 30, 32 d'une part, à un réservoir sans surpression 52 via une ligne d'évacuation comportant une restriction 583, et d'autre part, au conduit de carter 240 via une liaison de récupération de fluide 584 comportant un clapet anti-retour 581, la liaison de récupération de fluide 584 se raccordant sur la ligne d'évacuation entre le ou les moteurs et ladite restriction 583, et le clapet anti-retour 581 autorisant le passage de fluide seulement en direction du conduit de carter 240, grâce à quoi l'élévation de pression dans la ligne d'évacuation causée par ladite restriction 583 pendant l'opération de décrabotage provoque l'injection de fluide dans le ou les carters.

## Revendications

1. Dispositif (10, 210, 310, 410, 510) de transmission hydraulique comprenant au moins un moteur hydraulique (26A, 26B) à pistons radiaux, ledit moteur comportant
- un carter (38A),
- dans le carter, un bloc-cylindres (108) comprenant une pluralité de cylindres , chaque cylindre contenant un piston coulissant et étant disposé radialement par rapport à un axe de rotation du moteur ; et
- une came ondulée (114) pour les pistons ;
le dispositif comprenant en outre
- deux conduits de moteur (30, 32, 302A, 322A) respectivement pour l'alimentation en fluide et l'échappement de fluide du moteur, lesdits conduits de moteur étant susceptibles d'être mis en communication avec lesdits cylindres ; et
- un conduit de carter (40, 240) raccordé à un espace interne aménagé à l'intérieur du carter et dans lequel règne une pression dite pression de carter ;
le moteur étant susceptible d'être craboté, état dans lequel les pistons coulissent dans les cylindres en étant maintenus au contact de la came, et le moteur est apte à générer un couple de sortie sous l'effet d'une différence de pression entre les conduits de moteur, et d'être décraboté, état dans lequel les pistons sont maintenus en position rentrée à l'intérieur des cylindres;
le dispositif comprenant des moyens de crabotage aptes, pour réaliser le crabotage du moteur, à porter un premier (322A) des conduits de moteur à une première pression dite de crabotage supérieure à la pression de carter tout en permettant une évacuation de fluide par le conduit de carter ;
le dispositif **se caractérisant en ce qu'**il comporte, disposés sur le conduit de carter, des moyens (82, 282, 382, 482, 582) pour limiter la circulation de fluide dans ce conduit, de manière à provoquer une élévation de la pression dans le carter pendant l'opération de crabotage.

2. Dispositif selon la revendication 1, dans lequel les moyens pour limiter la circulation de fluide comprennent une première restriction (82, 282, 382, 482, 582).

3. Dispositif selon la revendication 1 ou 2, comprenant un limiteur de pression (80') disposé sur le conduit de carter et apte à limiter l'élévation de pression dans le carter.

4. Dispositif selon l'une quelconque des revendications 1 à 3, comprenant un clapet anti-retour (80) de limitation de pression, monté en parallèle avec les moyens (82) pour limiter la circulation de fluide, disposé entre le conduit de carter et une source auxiliaire de fluide sous pression, et permettant la circulation de fluide seulement dans le sens allant du carter vers ladite source.

5. Dispositif selon l'une quelconque des revendications 1 à 4, dans lequel les moyens de crabotage sont aptes à maintenir le deuxième conduit de moteur (302A) à une deuxième pression inférieure à la pression de crabotage pendant l'opération de crabotage, et les moyens pour limiter la circulation de fluide sont dimensionnés de telle sorte que pendant une majeure partie de l'opération de crabotage, la pression de carter s'établit entre la première et la deuxième pression.

6. Dispositif selon l'une quelconque des revendications 1 à 5, dans lequel les moyens de crabotage sont aptes, pendant l'opération de crabotage, en parallèle avec les moyens pour limiter la circulation de fluide, à relier le conduit de carter via un clapet taré (80") au deuxième conduit de moteur, afin de limiter la pression dans le carter.

7. Dispositif selon l'une quelconque des revendications 1 à 6, comportant une pompe principale (24), et dans lequel :
- les moyens de crabotage sont aptes à mettre en relation un orifice principal de refoulement (24A, 24B) de la pompe principale pendant l'opération de crabotage avec le premier conduit de moteur (322A), pour permettre l'alimentation du moteur ;
- le moteur est relié à au moins une roue (14A, 14B) pour l'entraîner ; et
- les moyens de crabotage sont aptes, avant de réaliser l'opération de crabotage, à synchroniser la pompe principale en faisant varier la cylindrée de celle-ci jusqu'à une valeur permettant d'entraîner le moteur à une vitesse de rotation différant de moins de 25 % de la vitesse de la roue.

8. Dispositif selon l'une des revendications 1 à 6, comportant une pompe principale (24) et une pompe auxiliaire (25), et dans lequel les moyens de crabotage sont aptes à relier un orifice de refoulement de la pompe auxiliaire avec le premier conduit de moteur (30, 32) pendant l'opération de crabotage.

9. Dispositif selon l'une quelconque des revendications 1 à 8, dans lequel les moyens de crabotage sont aptes, pendant l'opération de crabotage, à relier le conduit de carter (40) au deuxième conduit de moteur (302A).

10. Dispositif (420) selon l'une quelconque des revendications 1 à 9, dans lequel les moyens de crabotage sont aptes à relier le conduit de carter (240), en parallèle avec les moyens (282, 382, 482) pour limiter la circulation de fluide, à un conduit d'apport de fluide (70) via un clapet anti-retour de remplissage du carter (281, 381, 481), permettant l'apport de fluide dans le carter, notamment pendant l'opération de décrabotage du moteur.

11. Dispositif (220, 320, 420, 520) selon l'une quelconque des revendications 1 à 10, comportant en outre un accumulateur (74) apte à alimenter le conduit de carter (240) pour la mise sous pression de ce conduit pendant une opération de décrabotage du moteur, favorisant ainsi la rentrée des pistons dans les cylindres.

12. Dispositif (220) selon les revendications 2, 10, et 11, dans lequel les moyens de crabotage sont aptes, pendant l'opération de décrabotage du moteur, à relier l'accumulateur (74) au conduit de carter (240) du côté du carter (38A) par rapport à la première restriction (282) et/ou au clapet anti-retour de remplissage du carter (281).

13. Dispositif (320) selon la revendication 2 et la revendication 11 ou 12, dans lequel ladite première restriction (382) est disposée sur le conduit de carter (240) entre le carter et l'accumulateur (74), et pendant l'opération de crabotage du moteur, le fluide évacué du carter ne peut être dirigé vers l'accumulateur que via la première restriction.

14. Dispositif (420) selon l'une quelconque des revendications 11 à 13, dans lequel pour réaliser le décrabotage du moteur, les moyens de crabotage sont aptes dans une première étape, à relier les conduits de moteur au conduit de carter (240), et dans une deuxième étape, à relier l'accumulateur (74) au conduit de carter.

15. Dispositif (520) selon la revendication 14, dans lequel les moyens de crabotage sont aptes pour réaliser le décrabotage du moteur, à relier les conduits de moteur (30, 32) d'une part, à un réservoir sans surpression (52) via une ligne d'évacuation comportant une restriction (583), et d'autre part, au conduit de carter (240) via une liaison de récupération de fluide comportant un clapet anti-retour (581), la liaison de récupération de fluide se raccordant sur la ligne d'évacuation entre le ou les moteurs et ladite restriction, et le clapet anti-retour autorisant le passage de fluide seulement en direction du conduit de carter, grâce à quoi l'élévation de pression dans la ligne d'évacuation causée par ladite restriction pendant la deuxième étape provoque l'injection de fluide dans le carter.

## Patentansprüche

1. Vorrichtung (10, 210, 310, 410, 510) zur hydraulischen Übersetzung, umfassend wenigstens einen Radialkolben-Hydraulikmotor (26A, 26B), wobei der Motor umfasst
- ein Gehäuse (38A),
- in dem Gehäuse einen Zylinderblock (108), der eine Vielzahl von Zylindern umfasst, wobei jeder Zylinder einen Schiebekolben umfasst und in Bezug auf eine Rotationsachse des Motors radial angeordnet ist, und
- einen gewellten Nocken (114) für die Kolben,
wobei die Vorrichtung ferner umfasst
- zwei Motorleitungen (30, 32, 302A, 322A) für die Fluidzufuhr zu bzw. das Abführen von Fluid aus dem Motor, wobei die Motorleitungen geeignet sind, mit den Zylindern verbunden zu werden, und
- eine Gehäuseleitung (40, 240), die an einen Innenraum, welcher innerhalb des Gehäuses eingerichtet ist und in dem ein Druck, sogenannter Gehäusedruck herrscht, angeschlossen ist,
wobei der Motor geeignet ist, eingekuppelt zu werden, Zustand, in dem die Kolben mit dem Nocken in Kontakt gehalten in den Zylindern gleiten und der Motor geeignet ist, unter der Wirkung einer Druckdifferenz zwischen den Motorleitungen ein Ausgangsdrehmoment zu erzeugen, sowie ausgekuppelt zu werden, Zustand, in dem die Kolben in eingefahrener Position innerhalb der Zylinder gehalten sind,
wobei die Vorrichtung Einkuppelmittel umfasst, die geeignet sind, zum Herstellen des Einkuppelns des Motors eine erste (322A) der Motorleitungen auf einen ersten, sogenannten Einkuppeldruck zu bringen, der größer als der Gehäusedruck ist, und gleichzeitig ein Abführen von Fluid über die Gehäuseleitung zu ermöglichen,
wobei die Vorrichtung **dadurch gekennzeichnet ist, dass** sie an der Gehäuseleitung angeordnete Mittel (82, 282, 382, 482, 582) umfasst, um die Fluidzirkulation in dieser Leitung zu begrenzen, um eine Erhöhung des Drucks in dem Gehäuse während des Einkuppelvorgangs zu bewirken.

2. Vorrichtung nach Anspruch 1, bei der die Mittel zum Begrenzen der Fluidzirkulation eine erste Einschnürung (82, 282, 382, 482, 582) umfassen.

3. Vorrichtung nach Anspruch 1 oder 2, umfassend einen Druckbegrenzer (80'), der an der Gehäuseleitung angeordnet und geeignet ist, die Druckerhöhung in dem Gehäuse zu begrenzen.

4. Vorrichtung nach einem der Ansprüche 1 bis 3, umfassend ein Rückschlagventil (80) zur Druckbegrenzung, das zu den Mitteln (82) zum Begrenzen der Fluidzirkulation parallel geschaltet ist, das zwischen der Gehäuseleitung und einer Hilfsquelle für Druckfluid angeordnet ist und das die Fluidzirkulation nur in der Hin-Richtung des Gehäuses zu der Quelle ermöglicht.

5. Vorrichtung nach einem der Ansprüche 1 bis 4, bei der die Einkuppelmittel geeignet sind, die zweite Motorleitung (302A) auf einem zweiten Druck unterhalb des Einkuppeldrucks während des Einkuppelvorgangs zu halten, und die Mittel zum Begrenzen der Fluidzirkulation derart bemessen sind, dass während eines Hauptteils des Einkuppelvorgangs der Gehäusedruck sich zwischen dem ersten und dem zweiten Druck einstellt.

6. Vorrichtung nach einem der Ansprüche 1 bis 5, bei der die Einkuppelmittel geeignet sind, während des Einkuppelvorgangs, parallel zu den Mitteln zum Begrenzen der Fluidzirkulation, die Gehäuseleitung über ein geeichtes Ventil (80") mit der zweiten Motorleitung zu verbinden, um den Druck in dem Gehäuse zu begrenzen.

7. Vorrichtung nach einem der Ansprüche 1 bis 6, umfassend eine Hauptpumpe (24), und bei der:
- die Einkuppelmittel geeignet sind, eine Hauptdrucköffnung (24A, 24B) der Hauptpumpe während des Einkuppelvorgangs mit der ersten Motorleitung (322A) in Verbindung zu bringen, um die Versorgung des Motors zu ermöglichen,
- der Motor mit wenigstens einem Rad (14B, 14B) verbunden ist, um es anzutreiben, und
- die Einkuppelmittel geeignet sind, vor Ausführen des Einkuppelvorgangs die Hauptpumpe dadurch zu synchronisieren, dass deren Hubraum bis zu einem Wert verändert wird, der ermöglicht, den Motor mit einer Drehzahl anzutreiben, die um weniger als 25 % von der Geschwindigkeit des Rades abweicht.

8. Vorrichtung nach einem der Ansprüche 1 bis 6, umfassend eine Hauptpumpe (24) und eine Hilfspumpe (25), und bei der die Einkuppelmittel geeignet sind, eine Drucköffnung der Hilfspumpe mit der ersten Motorleitung (30, 32) während des Einkuppelvorgangs zu verbinden.

9. Vorrichtung nach einem der Ansprüche 1 bis 8, bei der die Einkuppelmittel geeignet sind, während des Einkuppelvorgangs die Gehäuseleitung (40) mit der zweiten Motorleitung (302A) zu verbinden.

10. Vorrichtung (420) nach einem der Ansprüche 1 bis 9, bei der die Einkuppelmittel geeignet sind, die Gehäuseleitung (240), parallel zu den Mitteln (282, 382, 482) zum Begrenzen der Fluidzirkulation, mit einer Fluidzuführleitung (70) über ein Rückschlagventil zum Füllen des Gehäuses (281, 381, 481), das das Zuführen von Fluid zu dem Gehäuse, insbesondere während des Vorgangs des Auskuppelns des Motors ermöglicht, zu verbinden.

11. Vorrichtung (220, 320, 420, 520) nach einem der Ansprüche 1 bis 10, ferner umfassend einen Speicher (74), der geeignet ist, die Gehäuseleitung (240) für die Druckbeaufschlagung dieser Leitung während eines Vorgangs des Auskuppelns des Motors zu versorgen, wodurch das Einfahren der Kolben in die Zylinder begünstigt wird.

12. Vorrichtung (220) nach den Ansprüchen 2, 10 und 11, bei der die Einkuppelmittel geeignet sind, während des Auskuppelvorgangs des Motors den Speicher (74) mit der Gehäuseleitung (240) auf der Seite des Gehäuses (38A) in Bezug auf die erste Einschnürung (282) und/oder das Rückschlagventil zum Füllen des Gehäuses (281) zu verbinden.

13. Vorrichtung (320) nach Anspruch 2 und Anspruch 11 oder 12, bei der die erste Einschnürung (382) an der Gehäuseleitung (240) zwischen dem Gehäuse und dem Speicher (74) angeordnet ist, und während des Einkuppelvorgangs des Motors das aus dem Gehäuse abgeführte Fluid nur über die erste Einschnürung zu dem Speicher geleitet werden kann.

14. Vorrichtung (420) nach einem der Ansprüche 11 bis 13, bei der zum Durchführen des Auskuppelns des Motors die Einkuppelmittel in einem ersten Schritt geeignet sind, die Motorleitungen mit der Gehäuseleitung (240) zu verbinden und in einem zweiten Schritt den Speicher (74) mit der Gehäuseleitung zu verbinden.

15. Vorrichtung (520) nach Anspruch 14, bei der zum Durchführen des Auskuppelns des Motors die Einkuppelmittel geeignet sind, die Motorleitungen (30, 32) einerseits mit einem überdrucklosen Behälter (52) über eine eine Einschnürung (583) umfassende Abführleitung und andererseits mit der Gehäuseleitung (240) über eine ein Rückschlagventil (581) umfassende Fluidrückgewinnungsverbindung zu verbinden, wobei die Fluidrückgewinnungsverbindung an die Abführleitung zwischen dem oder den Motoren und der Einschnürung anschließt, und wobei das Rückschlagventil den Fluiddurchgang nur in Richtung der Gehäuseleitung zulässt, wodurch die Druckerhöhung in der Abführleitung, welche durch die Einschnürung während des zweiten Schrittes verursacht ist, das Einspritzen von Fluid in das Gehäuse bewirkt.

## Claims

1. Hydraulic transmission apparatus (10, 210, 310, 410, 510) comprising at least one hydraulic motor (26A, 26B) having radial pistons, said motor comprising:
• a casing (38A);
• inside the casing, a cylinder block (108) that comprises a plurality of cylinders, each cylinder containing a slidably mounted piston and being disposed radially relative to an axis of rotation of the motor; and
• an undulating cam (114) for the pistons;
the apparatus further comprising:
• two motor ducts (30, 32, 302A, 322A) respectively for the fluid feed and for the fluid discharge of the motor, said motor ducts being suitable for being put into communication with said cylinders; and
• a casing duct (40, 240) connected to an internal space provided inside the casing and in which a "casing pressure" prevails;
the motor being suitable for being clutched, in which state the pistons slide in the cylinders while being held in contact with the cam, and the motor is suitable for generating outlet torque under the effect of a difference in pressure between the motor ducts, and for being declutched, in which state the pistons are held in the retracted position inside the cylinders;
the apparatus further comprising clutching means that, in order to perform the clutching of the motor, are suitable for bringing a first one (322A) of the motor ducts to a "clutching" first pressure that is higher than casing pressure while also making it possible for fluid to be evacuated via the casing duct;
the apparatus being **characterized in that**, disposed on the casing duct, said apparatus further comprises means (82, 282, 382, 482, 582) for limiting the flow of fluid in said casing duct, in a manner such as to cause the pressure inside the casing to increase during the clutching operation.

2. Apparatus according to claim 1, wherein the means for limiting the flow of fluid comprise a first constriction (82, 282, 382, 482, 582).

3. Apparatus according to claim 1 or claim 2, further comprising a pressure limiter (80') disposed on the casing duct and suitable for limiting the increase in pressure in the casing.

4. Apparatus according to any one of claims 1 to 3, further comprising a pressure-limiting check valve (80), mounted in parallel with the means (82) for limiting the flow of fluid, disposed between the casing duct and an auxiliary source of pressurized fluid, and allowing fluid to flow only in the direction going from the casing towards said source.

5. Apparatus according to any one of claims 1 to 4, wherein the clutching means are suitable for maintaining the second motor duct (302A) at a second pressure less than the clutching pressure during the clutching operation, and the means for limiting the flow of fluid are dimensioned in such a manner that, during a major fraction of the clutching operation, the casing pressure remains between the first pressure and the second pressure.

6. Apparatus according to any one of claims 1 to 5, wherein, in parallel with the means for limiting the flow of fluid, the clutching means are suitable, during the clutching operation, for connecting the casing duct via a rated valve (80") to the second motor duct, in order to limit the pressure in the casing.

7. Apparatus according to any one of claims 1 to 6, further comprising a main pump (24), and wherein:
• the clutching means are suitable for putting a main delivery orifice (24A, 24B) of the main pump into communication with the first motor duct (322A) during the clutching operation, so as to make it possible to feed the motor;
• the motor is connected to at least one wheel (14A, 14B) so as to drive it; and
• the clutching means are suitable, before the clutching operation is performed, for synchronizing the main pump by causing the cylinder capacity of said pump to vary until it reaches a value making it possible to drive the motor at a speed of rotation different by less than 25% from the speed of the wheel.

8. Apparatus according to any one of claims 1 to 6, further comprising a main pump (24) and an auxiliary pump (25), and wherein the clutching means are suitable for connecting a delivery orifice of the auxiliary pump to the first motor duct (30, 32) during the clutching operation.

9. Apparatus according to any one of claims 1 to 8, wherein the clutching means are suitable, during the clutching operation, for connecting the casing duct (40) to the second motor duct (302A).

10. Apparatus (420) according to any one of claims 1 to 9, wherein, in parallel with the means (282, 382, 482) for limiting the flow of fluid, the clutching means are suitable for connecting the casing duct (240) to a fluid supply duct (70) via a check valve for filling the casing (281, 381, 481), making it possible to supply fluid to the casing, in particular during the operation of declutching the motor.

11. Apparatus (220, 320, 420, 520) according to any one of claims 1 to 10, further comprising an accumulator (74) suitable for feeding the casing duct (240) for putting this duct under pressure during an operation of declutching the motor, thereby making it easier for the pistons to retract into the cylinders.

12. Apparatus (220) according to claims 2, 10, and 11, wherein the clutching means are suitable, during the operation of declutching the motor, for connecting the accumulator (74) to the casing duct (240) on the same side as the casing (38A) with respect to the first constriction (282) and/or with respect to the check valve (281) for filling the casing.

13. Apparatus (320) according to claim 2 and to claim 11 or 12, wherein said first restriction (382) is disposed on the casing duct (240) between the casing and the accumulator (74), and, during the operation of clutching the motor, the fluid removed from the casing can be directed towards the accumulator via the first constriction only.

14. Apparatus (420) according to any one of claims 11 to 13, wherein, in order to declutch the motor, the declutching means are suitable, in a first step, for connecting the motor ducts to the casing duct (240), and, in a second step, for connecting the accumulator (74) to the casing duct.

15. Apparatus (520) according to claim 14, wherein, in order to declutch the motor, the clutching means are suitable for connecting the motor ducts (30, 32) firstly to an unpressurized reservoir (52) via a removal line including a constriction (583), and secondly to the casing duct (240) via a fluid recovery link including a check valve (581), the fluid recovery link connecting to the removal line between the motor(s) and said constriction, and the check valve allowing the fluid to pass through only towards the casing duct, whereby the increase in pressure in the removal line caused by said constriction during the second step causes fluid to be injected into the casing.
